(19) Europäisches Patentamt
European Patent Office
Office européen des brevets

(11) **EP 1 319 535 B1**

(12) **EUROPÄISCHE PATENTSCHRIFT**

(45) Veröffentlichungstag und Bekanntmachung des Hinweises auf die Patenterteilung:
**31.01.2007 Patentblatt 2007/05**

(51) Int Cl.:
***B60G 17/015*** *(2006.01)*

(21) Anmeldenummer: **02026714.2**

(22) Anmeldetag: **30.11.2002**

(54) **Verfahren zur On Board Ermittlung des wirkenden Kippmomentes und/oder der aktuellen Schwerpunkthöhe eines Fahrzeuges**

Method for the on board determination of the existing rolling moment and/or the actual height of the centre of gravity of a vehicle

Méthode pour déterminer on-board le moment de roulis et/ou la hauteur actuelle du centre de gravité d'un véhicule

(84) Benannte Vertragsstaaten:
**DE FR IT NL SE**

(30) Priorität: **15.12.2001 DE 10161799**

(43) Veröffentlichungstag der Anmeldung:
**18.06.2003 Patentblatt 2003/25**

(73) Patentinhaber: **MAN Nutzfahrzeuge Aktiengesellschaft
80976 München (DE)**

(72) Erfinder:
• **Lindner, Axel, Dipl.-Ing.
80803 München (DE)**

• **Hirschberg, Wolfgang, Dr.techn.
4400 Sankt Ulrich (AT)**
• **Jung, Christoph, Dipl.-Ing.
85757 Karlsfeld (DE)**

(56) Entgegenhaltungen:
**EP-A- 0 684 150      EP-A- 0 798 615
EP-A- 1 046 571      DE-A- 19 958 221
US-A- 5 825 284**

• **PATENT ABSTRACTS OF JAPAN Bd. 016, Nr. 519 (M-1330), 26. Oktober 1992 (1992-10-26) & JP 04 191180 A (HINO MOTORS LTD), 9. Juli 1992 (1992-07-09)**

**Beschreibung**

Die Erfindung betrifft ein Verfahren nach dem Oberbegriff des Anspruches 1.

Ein Verfahren dieser Art ist aus der DE 199 58 221 A1 bekannt.

Um das Kippverhalten eines Fahrzeuges zu erkennen, wird das betrachtete Fahrzeug mit normaler Geschwindigkeit in Links- und Rechtskurven gefahren und dabei die Druckveränderungen von einem linken und einem rechten Luftfederbalg einer Achse gemessen. Die prozentuale Druckveränderung in den Luftfederbälgen und eine gemessene Querbeschleunigung wird als Kriterium für eine mögliche Kippgefahr des betrachteten Fahrzeuges herangezogen, wobei zum Verfahren keine Angaben gemacht werden.

Insbesondere wird in der genannten Druckschrift nichts über den Schwerpunkt von Fahrzeug und Beladung ausgesagt.

Ferner beschreibt die EP 0 684 150 A ein Verfahren, mit dem die Fahrstabilität eines Fahrzeugs erfasst wird. Die vorgeschlagene technische Lösung sieht Sensoren vor, mit denen die in vertikaler und in horizontaler Richtung auf den Schwerpunkt des Fahrzeugs einwirkenden Kräfte detektiert werden. In einer Datenbank werden mögliche Maximalwerte für Beschleunigungen bzw. Fahrzeuggeschwindigkeiten hinterlegt und die aufgenommenen Momentanwerte mit diesen Maximalwerten in einer Auswerteinheit verglichen. Sobald eine Maximalwertüberschreitung erkannt wird, kann ein Fahrzeugführer hierüber informiert werden. Die Ermittlung eines Konkreten Zahlenwerts für die Schwerpunkthöhe und/oder für das Kippmoment ist mit dem in dieser Druckschrift beschriebenen Verfahren allerdings nicht möglich.

Aufgabe der Erfindung ist es, ein wirkendes Kippmoment und/oder die Höhe des Schwerpunktes zu erfassen.

Die Aufgabe wird durch die Ansprüche 1 und 2 gelöst. Vorteilhafte Ausbildungen der Erfindung enthalten die Unteransprüche.

In der folgenden Beschreibung ist auf die Erfindung näher eingegangen:

**1. Ermittlung des Kippmomentes und der Schwerpunkthöhe**

**1.1. Grundlagen**

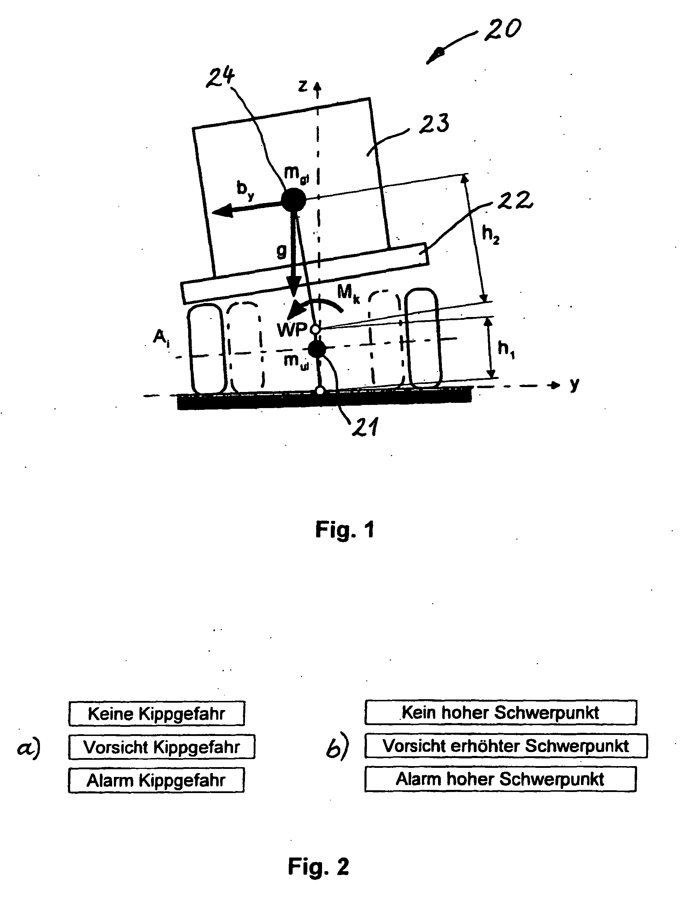

Das einfache Wankmodell eines Fahrzeuges gemäß Bild 1 bildet die Grundlage für den Schätzalgorithmus zur Bestimmung der Schwerpunkthöhe. Es gilt für die luftgefederte Achse $A_i$, i = 1, 2, ... n eines n-achsigen Fahrzeuges, typischerweise für den Hinterwagen eines Nutzfahrzeuges und auch sinngemäß für einen Anhänger oder Sattelauflieger (Fig. 1). Die luftgefederte Achse $A_i$ steht auch sinngemäß für eine Gruppe von mehreren, in einer Druckluftversorgung zusammengefassten Fahrzeugachsen, beispielsweise für die Antriebs- und Nachlaufachse eines Zugfahrzeuges oder die drei Achsen eines Sattelaufliegers.

Fig. 1 zeigt das Wankmodell eines Fahrzeuges, beispielsweise für dessen Hinterwagen.

Es bezeichnen:

WP    Wankpol der Relativdrehung Aufbau zur Achse $A_i$,
$m_{gi}$    anteilige gefederte Masse
$m_{ui}$    ungefederte Masse der Achse $A_i$
$h_1$    Höhe des Wankpols über Grund
$h_2$    Höhe des Schwerpunktes der gefederten Massen über dem Wankpol
$b_y$    Querbeschleunigung, aufbaufest gemessen.

Das auf die Fahrzeugachse $A_i$ wirkende Kippmoment $M_{ki}$ lässt sich über die Luftfederdruck-Differenz $\Delta p_i = p_{re} - p_{li}$ zwischen der rechten und linken Luftfeder berechnen:

$$M_{ki} \simeq f(\Delta p_i). \qquad\qquad\qquad\qquad (1)$$

Dieses Kippmoment $M_{ki}$ ist durch das Momentengleichgewicht bezüglich des Wankpols WP bestimmt.

$$M_{ki} \simeq f(\Delta p_i) = m_{gi}\, b_y\, h_2. \qquad\qquad\qquad (2)$$

Für das Momentengleichgewicht (2), welches den kleinen Momentenanteil infolge der Gravitation g vernachlässigt, ist es unerheblich, ob die fahrzeugfest gemessene Querbeschleunigung $b_y$ von einer Kurvenfahrt und/oder von einer hängenden, das heißt zur Seite geneigten Fahrbahn herrührt.

Das erfindungsgemäße Verfahren zur Bestimmung der Schwerpunkthöhe h beruht auf den Beziehungen

$$h \approx h_1 + h_2 \text{ (Fig. 1)}, \tag{3}$$

unter Verwendung der bekannten Wankpolhöhe

$$h_1 \approx \text{konstant} \tag{4}$$

$$h_2 \approx M_{ki} / (m_{gi} \, b_y), \tag{5}$$

gebildet aus dem durch die Druckdifferenz $\Delta p_{li}$ ermittelten Kippmoment $M_{ki}$, der gemessenen Querbeschleunigung $b_y$ und der beispielsweise aus den Balgdrücken ermittelten, gefederten Massen $m g_i$. Damit Beziehung (5) definiert ist, muss die zeitlich veränderliche Querbeschleunigung einen Betrag $b_y(t) > 0$ haben. Das heißt, die Schwerpunkthöhe kann nur identifiziert werden bei Kurvenfahrt oder anderen Fahrzuständen, bei denen eine Querbeschleunigung auf das Fahrzeug einwirkt.

Da die ermittelte Schwerpunkthöhe h infolge der trotz Tiefpass-Filterung verrauschten Eingangsdaten $M_{ki}$ und $b_y$ ebenfalls zeitlich verrauscht ist, ist eine zusätzliche Datenglättung auf die während einer Fahrt gewöhnlich konstanten Größe $h_k$ erforderlich. Zu diesem Zweck eignet sich ein rekursiver Schätzer mit sukzessiver Mitteilung.

**1.2 Nutzen des Verfahrens**

**Kippmoment $M_{ki}$:**

Mit dem aus der momentanen Druckdifferenz $\Delta p_{li}$ und dem erfindungsgemäßen Verfahren bestimmten Kippmoment $M_{ki}$ läßt sich unmittelbar eine der definierten Warnstufen für die **aktuelle Kippgefahr** auslösen und als Fahrerinformation ausgeben, beispielsweise durch die drei Anzeigestufen, Fig. 2a.

Des weiteren wird mit der Erfassung des Kippmomentes eine zusätzliche Eingangsgröße für eine fortgeschrittene Fahrdynamikregelung (FDR) verfügbar, welche insbesondere das Umkippen eines Fahrzeuges verhindern soll.

**Schwerpunkthöhe $h_k$:**

Aufgrund der mit dem erfindungsgemäßen Verfahren bestimmten, im Verlauf einer Fahrt konstanten Schwerpunkthöhe $h_k$ läßt sich eine definierte Warnstufe für eine **latente** Kippgefahr auslösen und als Fahrerinformation ausgeben. Hierzu eignen sich beispielsweise die drei Anzeigestufen, Fig. 2b.

Zusätzlich zur reinen Fahrerinformation ist die Rückführung der Schwerpunkthöhe $h_k$ für eine fortgeschrittene Fahrdynamik-Regelung besonders vorteilhaft, da sich damit die Ansprechschwellen für einen kippstabilisierenden Reglereingriff optimal auslegen lassen. Aber auch für andere automatisierte Fahrzeugeingriffe ist die Verfügbarkeit der Schwerpunkthöhe als zusätzliche Eingangsgröße von großem Nutzen.

**2. Bestimmung des wirkenden Kippmomentes**

Das erfindungsgemäße Verfahren beruht auf der Messung und Verarbeitung der Differenz der Luftfederdrücke $\Delta p_i = p_{re} - p_{li}$ einer Fahrzeugachse $A_i$ und der Berücksichtigung des Wankpoles. Hinsichtlich der Luftfederungen können zwei Bauarten unterschieden werden:

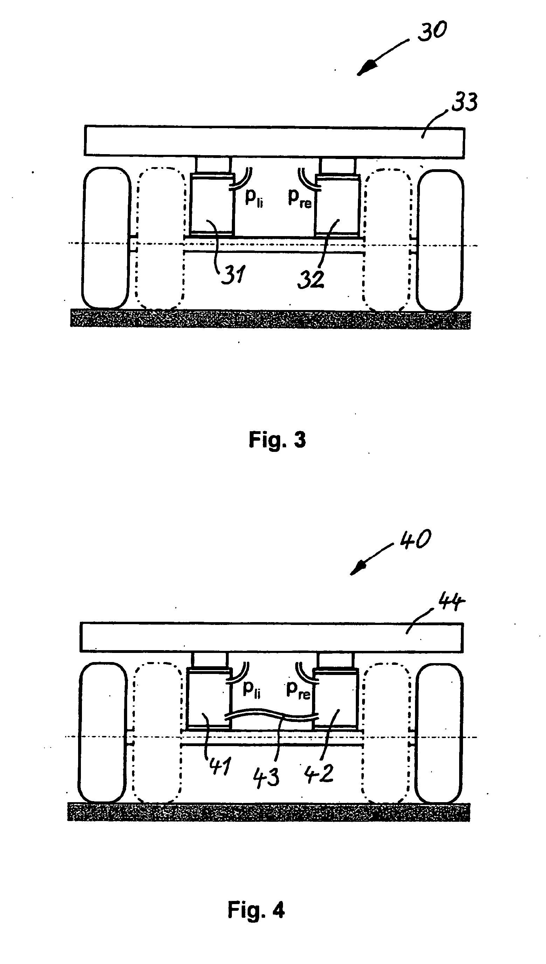

a) **Luftfederungen mit zwei getrennten bzw. unabhängigen Druckluftversorgungen rechts/links (Fig. 3).**

Die Druckdifferenz $\Delta p_i \approx p_{re} - p_{li}$ ist hier unmittelbar aus den Druckmessungen rechts/links verfügbar. Ein möglicher, bleibender Luftdruckoffset muss bestimmt werden, um damit die Druckdifferenz zur offsetfreien, stationären Druckdifferenz $\Delta p_{i\,stat}$ zu kompensieren. Ein anhaltender Luftdruckoffset auf waagrechter Fahrbahn und bei mittiger Beladung kann beispielsweise aus Toleranzen der Steuerventile, der Niveauregulierung oder aus möglichen Unsymmetrien oder Verzügen des Fahrzeuges herrühren.

Bei vorhandenem Luftdruckoffset würde die unmittelbare Auswertung auf ein mehr oder weniger fehlerhaftes Kippmoment führen. Damit bildet die Offset-Kompensation ein wesentliches Merkmal des Verfahrens. Die Bestimmung des bleibenden Luftdruckoffsets wird erfindungsgemäß auf waagrechten Teilstrecken des Fahrkurses vorgenommen.

b) **Luftfederungen mit einer gemeinsamen Druckluftversorgung rechts/links, deren Federbälge mit einer Ausgleichsleitung verbunden sind (Fig. 4).**

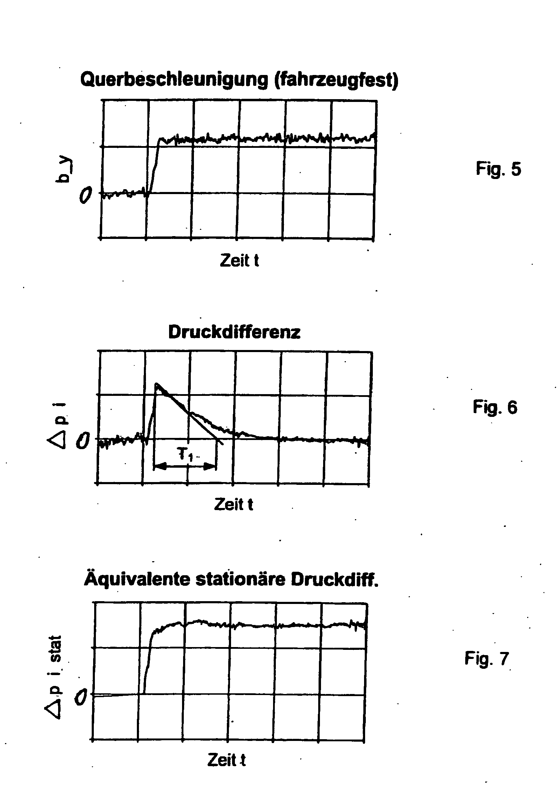

Wegen der Verbindungsleitung findet der Druckausgleich zwischen dem linken und dem rechten Federbalg in der gezeigten Form statt (Fig. 6), und verhindert eine unmittelbare Auswertung der Luftdruckdifferenzen. Dieses Überströmverhalten lässt sich durch ein $DT_1$-Glied (6) mit der Zeitkonstante $T_1$ beschreiben. Die Zeitkonstante $T_1$ ist für verschiedene Achsen bekannt, für die Verstärkung gilt hier $V_D = 1$.

Der Abfall des Differenzdruckes $\Delta p_i$ lässt sich durch die Aufschaltung eines PI-Gliedes als Umkehrfunktion zum $DT_1$-Verhalten wiederum zur stationären Druckdifferenz $\Delta p_{i\,stat}$ kompensieren:

$$T_1\,\dot{y} + y = V_D\,\dot{x} \qquad \text{DT}_1\text{-Glied: Eingang x(t), Ausgang y(t)} \qquad (6)$$

$$\bar{x} = V_P\,(y + \frac{1}{T_n}\int y\,dy\,) \qquad \text{Umkehrfunktion PI-Glied: Eingang y(t), Ausgang } \bar{x}(t) \quad (7)$$

Damit kann die stationäre Balgdruckdifferenz $\Delta p_{i\,stat}$ bestimmt werden, unter der Voraussetzung, dass bei Kurvenfahrt ein bestimmter Schwellenwert $b_y$ für die Querbeschleunigung überschritten wird. Diese Druckdifferenz ist erfindungsgemäß für die nachfolgende Berechnung des aktuellen Kippmomentes erforderlich.

Mit der stationären Druckdifferenz einer Achse $A_i$ wird der auf diese wirkende Anteil des Fahrzeug-Kippmomentes mit dem linearen Ansatz

$$M_{ki} = d_{1\,i} + d_{2\,i}\,\Delta p_{i\,stat} \qquad\qquad (8)$$

approximiert, wobei $d_{1\,i}$ und $d_{2\,i}$ zwei achsenspezifische, bekannte Approximationskoeffizienten sind (Fig. 6).

### 3. Gesamtes Kippmoment

Schließlich muss noch das gesamte, auf das Fahrzeug einwirkende Kippmoment $M_k$ infolge der Beladung durch Addition der auf die Achsen wirkenden Einzelkippmomente bestimmt werden:

$$M_k = \sum_i M_{ki} \qquad\qquad (9)$$

Für ein zweiachsiges Fahrzeug mit einer Vorderachse VA und einer Hinterachse HA gilt dann beispielsweise

$$M_k = M_{k\,VA} + M_{k\,HA} \qquad\qquad (10)$$

und für einen Sattelzug mit einer Hinterachse HA des Zugfahrzeuges und der zusammengefassten Achsengruppe AA des Aufliegers:

$$M_k = M_{k\ HA} + M_{k\ AA}. \tag{11}$$

Bei teilluftgefederten Fahrzeugen (das sind Fahrzeuge, bei denen nicht alle Achsen luftgefedert sind), kann das Kippmoment näherungsweise durch Auswertung der verbleibenden, luftgefederten Achse bzw. Achsen abgeschätzt werden.

**4. Bestimmung der Schwerpunkthöhe**

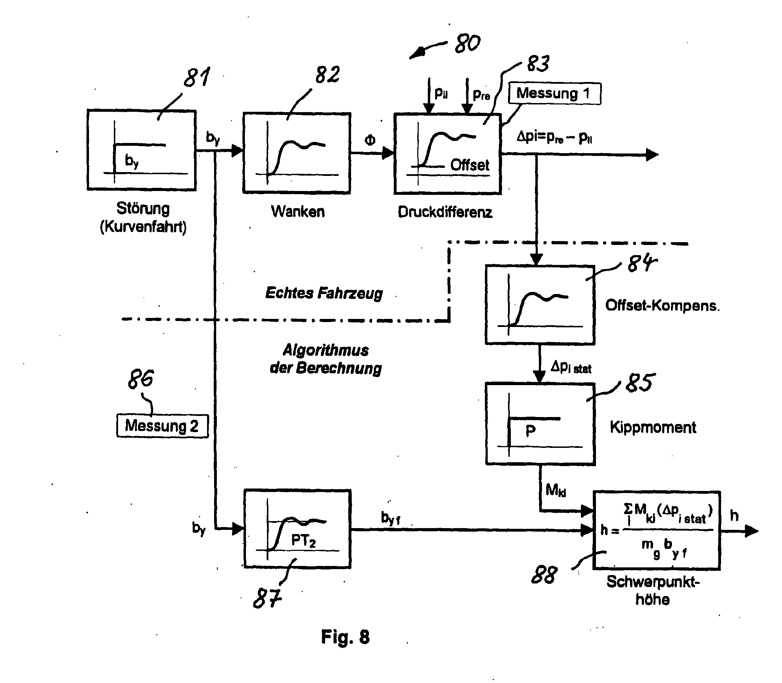

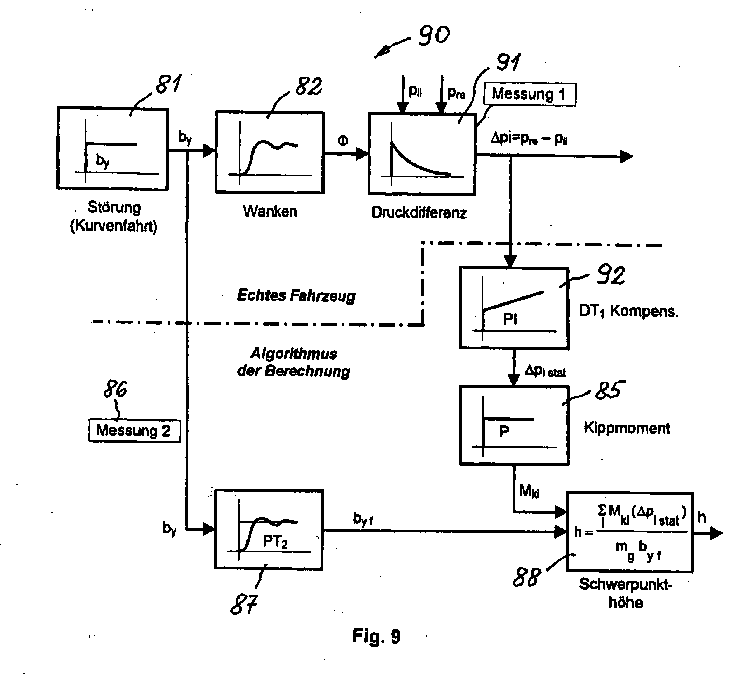

Mit der beschriebenen Druckabfallkompensation und unter der näherungsweisen Einbeziehung der Wankdynamik des Fahrzeuges durch ein $PT_2$-Glied ergibt sich die in Fig. 8 bzw. in Fig. 9 gezeigte erfindungsgemäße Struktur des Algorithmus zur Bestimmung des anteiligen Kippmomentes und der lokalen Schwerpunkthöhe für eine der luftgefederten Achsen $A_i$.

Es gelten:

Fig. 8 für die Bauweise **"Unabhängige Druckluftversorgungen rechts/links"**
Fig. 9 für die Bauweise **"Gemeinsame Druckluftversorgungen rechts/links".**

Diese Figuren zeigen die Strukturen der beiden Verfahren in der Form des dynamischen Übergangsverhaltens auf eine von einer Kurvenfahrt herrührenden Störung als Querbeschleunigungssprung. Infolge der Fahrzeugträgheit wird sich eine zeitverzögerte Wankbewegung (Wankwinkel Φ) einstellen. Die Wankdynamik wird im erfindungsgemäßen Verfahren näherungsweise als $PT_2$-Glied beschrieben:

$$T_2\ \ddot{y} + T_1\ \dot{y} + y = V_P\ x \qquad PT_2\text{-Glied: Eingang } x(t),\text{ Ausgang } y(t) \tag{12}$$

Darin bezeichnen $T_1$ und $T_2$ zwei bekannte, fahrzeugspezifische Zeitkonstanten und für die Verstärkung gilt $V_P = 1$. Das $PT_2$-Glied bewirkt eine Tiefpassfilterung der Messgröße Querbeschleunigung $b_y$ (Messung 2), so dass die gefilterte Größe $b_{y\ f}$ zeitsynchron zum Vorgang im realen Fahrzeug ablaufen kann.
Durch das Wanken des Fahrzeuges tritt im rechten und linken Luftfederbalg eine Druckdifferenz $\Delta p_i = p_{re} - p_{li}$ auf (Messung 1), welche

für die Bauweise "mit unabhängiger Druckluftversorgung", um einen möglichen, bleibenden Druckluftoffset zu bereinigen ist,

bei Bauweise "mit Verbindungsleitung", der infolge des Überströmens auftretende Druckdifferenzausgleich gemäß (7) zur stationären Druckdifferenz $\Delta p_{i\ stat}$ kompensiert werden muss.
Das auf eine Achse einwirkende Kippmoment $M_{ki}$ ist gemäß (8) näherungsweise proportional zur stationären Druckdifferenz.
Schließlich erfolgt die Berechnung der Schwerpunkthöhe h aus den aufsummierten Teilkippmomenten $M_{ki}$ und der gefilterten Querbeschleunigung $b_{y\ f}$ gemäß (3), (4) und (5). Die Eingangsgröße "gefederte Masse" mg stammt aus einer vorausgehenden statischen Achslastermittlung aus den Luftfederdrücken, die On Board am Ort der ‚Beladung (im Stand) vorgenommen wird und somit bei Fahrbeginn mit jeder neuen Beladung bereits vorliegt.
In der Zeichnung ist das Verfahren gemäß der Erfindung schematisch dargestellt.
Es zeigen:

Fig. 1    das Wankmodell eines Fahrzeuges,

Fig. 2    eine Möglichkeit der Anzeige über die Anzeige in einem Display,

Fig. 3    eine luftgefederte Achse mit unabhängiger Druckluftversorgung,

Fig. 4    eine luftgefederte Achse mit Druckluftversorgung und Verbindungsleitung,

Fig. 5    ein Diagramm Querbeschleunigung,

Fig. 6    ein Diagramm Druckdifferenz für die Ausführung "mit Verbindungsleitung",

Fig. 7    ein Diagramm äquivalente stationäre Druckdifferenz,

Fig. 8    ein Blockschaltbild für Messung und Berechnung bei unabhängiger Druckluftversorgung der Luftfederbälge und

Fig. 9    ein Blockschaltbild für Messung und Berechnung bei Ausführung "mit Verbindungsleitung zwischen den Luftfederbälgen".

Die Fig. 1 zeigt das Wankmodell 20 beispielsweise eines Lkw. Die Masse 21, $m_{ui}$ ist der
Anteil der ungefederten Massen des Fahrzeuges, die hauptsächlich die Achse $A_i$ mit ihrem Gewicht darstellt,
mit dem Höhenabstand $h_1$ des Wankpoles WP.
Das Teil 22 stellt symbolisiert den Anteil des gefederten Aufbaues oder Chassis dar, den die Achse trägt. Das
Teil 23 stellt symbolisch den Anteil der Beladung dar, den die Achse trägt. Im Schwerpunkt 24, $m_{gi}$ sind die gefederten
Massen vereint gedacht, die anteilig von der Beladung, Teil 23 und dem Aufbau, Teil 22 auf die Achse entfallen. Das
Maß $h_2$ ist der Schwerpunktabstand der Masse 24, $m_{gi}$ zum Wankpol WP. Die Gravitation ist mit g und die Querbeschleunigung mit $b_y$ dargestellt.
Die Fig. 2 zeigt beispielhaft eine Anzeige im Fahrerdisplay. Die Fig. 2a zeigt an, ob Kippgefahr vorhanden ist
oder nicht. Die Fig. 2b zeigt an, ob ein hoher Schwerpunkt vorliegt oder nicht. Für die Berechnung der Kippgefahr und
die Höhe $h_2$ des Schwerpunktes genügt bereits eine die Fahrt einer leichten Links- oder Rechtskurve. Auch müssen die
genannten Kurven nicht mit einer bestimmten Geschwindigkeit gefahren werden. Die Anzeige im Fahrerdisplay kann
sofort erfolgen. Eine mögliche Kippgefahr kann auch nach auf einer Seite geneigten Fahrbahn ermittelt werden.
Die Fig. 3 zeigt die Anordnung 30 und Versorgung 30 der Luftfedern 31, 32. Hier ist die unabhängige Versorgung
30 der Luftfedern 31, 32 gezeigt, wobei mit der Druckluft $p_{li}$ die linke Luftfeder 31 und mit der Druckluft $p_{re}$ die rechte
Luftfeder 32 versorgt wird. Das Teil 33 ist symbolisiert das Chassis.
Die Fig. 4 zeigt die Anordnung 40 und Versorgung 40 der Luftfedern 41, 42. Über eine Verbindungsleitung 43
wird ein Druckluftausgleich zwischen den Luftfederbälgen 41, 42 erreicht. Über die Leitung 43 kann aber auch die
Druckluftversorgung 40 mit einer Leitung (nicht dargestellt), die in die Leitung 43 mündet, erfolgen. Das Teil 44 ist
symbolisch das Chassis.
Die Fig. 5 zeigt beispielhaft eine dem Fahrzeug auferlegte Querbeschleunigung $b_y$ bei einer Kurvenfahrt.
Bei der gemeinsamen Luftversorgung 40 oder mit einer Verbindungsleitung 43 versehenen Luftbälge 41, 42
wird das Verhalten des Luftdruckes in der durch die Querbeschleunigung belasteten Luftfeder 41, 42 erfasst. Dieses
Verhalten hat die Form nach Fig. 6. Der Luftdruck in der belasteten Luftfeder 41, 42 steigt an, ähnlich dem Verhalten
wie ohne Verbindungsleitung 43, fällt aber dann durch den Luftdruckausgleich durch Verbindungsleitung 43 ähnlich
einer fallenden Geraden ab, so dass sich im Diagramm eine Art Dreieck bilden lässt. Die Zeit $T_1$ ist dabei das Kriterium,
nach dem sich die äquivalente stationäre Druckdifferenz $\Delta_{Pi\,stat}$ bilden lässt.
Die Fig. 8 zeigt das Blockschaltbild 80 des Verfahrens für eine unabhängige Druckluftversorgung. Eine von
einer Querbeschleunigung $b_y$ herrührende Störung 81 wird als Querbeschleunigungssprung 81 eingeleitet.
Infolge der Fahrzeugträgheit wird sich eine zeitverzögerte Wankbewegung 82 (Wankwinkel $\Phi$) einstellen. Die
Wankdynamik wird im erfindungsgemäßen Verfahren näherungsweise durch das $PT_2$-Glied 87 beschrieben.
Das $PT_2$-Glied 87 bewirkt eine Tiefpassfilterung der Meßgröße 86 Querbeschleunigung $b_y$ /(Messung 2), so
dass die gefilterte Größe $b_{y\,f}$ zeitsynchron zum Vorgang im realen Fahrzeug ablaufen kann.
Durch das Wanken 82 des Fahrzeuges tritt im rechten und linken Luftfederbalg eine Druckdifferenz 83 auf
(Messung 1), welche um einen möglichen, bleibenden Luftdruckoffset 84 zu bereinigen ist.
Das auf eine Achse einwirkende Kippmoment $M_{ki}$ ist gemäß der Berechnung 85 proportional zur stationären
Druckdifferenz.
Schließlich erfolgt aus der Berechnung 88 die Schwerpunkthöhe h aus den aufsummierten Teilkippmomenten
$M_{ki}$ und der gefilterten Querbeschleunigung $b_{y\,f}$. Die Eingangsgröße "gefederte Masse" mg stammt aus einer vorausgehenden statischen Achslastermittlung.
Die Fig. 9 zeigt das Blockschaltbild 90 des Verfahrens für eine mit einer Verbindungsleitung 43 zwischen den
Luftfederbälgen 41, 42 versehenen Luftfederung.
Für die Fig. 9 gilt die gleiche Beschreibung, wie für Fig. 8, nur dass hier der infolge des Überströmens auftretende
Druckdifferenzausgleich 91 zur stationären Druckdifferenz $\Delta p_{i\,stat}$ durch die Berechnung 92 kompensiert werden muss.

**Patentansprüche**

1.  Verfahren zur On Board Ermittlung des wirkenden Kippmomentes ($M_k$) eines Fahrzeuges, mit mindestens einer
    luftgefederten Achse, mit Luftfedern (31, 32, 41, 42) links und rechts der genannten mindestens einen Achse zum
    anteiligen Abstützen der gefederten Massen ($m_g$) des Fahrzeuges, mit Sensoren zum Erfassen des Luftdruckes

($p_{li}$, $p_{re}$) in jeder der genannten Luftfedern, mit einer Luftversorgung (30, 40) für die Luftfedern (31, 32, 41, 42), wobei von den Luftfedern entweder jede Luftfeder unabhängig versorgt (30) wird, oder die Luftfedern über eine gemeinsame Zuführungsleitung versorgt werden oder eine Verbindungsleitung (43) haben und mit einem Bordrechner oder gleichwertigen Rechner, **dadurch gekennzeichnet, dass** das ungefähre Kippmoment ($M_k$) aus der Kenntnis der unterschiedlichen Drücke ($p_{li}$, $p_{re}$) in den Luftfedern (31, 32, 41, 42) links und rechts mindestens einer Achse und unter Berücksichtigung, ob jede Luftfeder je Achse unabhängig (30) oder ob die linke und rechte Luftfeder einer Achse über eine Verbindungsleitung (43) verbunden sind, gebildet wird, und dass ein gegebenenfalls auftretender, bleibender Luftdruckoffset bestimmt und in die Berechnung des Kippmomentes ($M_k$) einbezogen wird.

2. Verfahren nach Anspruch 1, **dadurch gekennzeichnet, dass** eine aktuelle Schwerpunkthöhe (h) des Fahrzeuges unter Zugrundelegung des ermittelten Kippmomentes ($M_k$) aus

   * einer On Board gemessenen Querbeschleunigung ($b_y$) des Kraftfahrzeuges,
   * der Höhe des Schwerpunkts ($h_2$) der gefederten Masse (24) über dem Wankpol (WP), wobei die Höhe des Schwerpunkts ($h_2$) der gefederten Masse (24) über dem Wankpol (WP) aus dem Kippmoment ($M_k$) und der On Board gemessenen Querbeschleunigung ($b_y$) ermittelt wird und wobei die gefederte Masse (24) aus den gefederten Massen ($m_{gi}$) des Fahrzeugaufbaues (22) und der Beladung (23) besteht und
   * den ungefederten Massen (21) und der Wankpolhöhe ($h_1$)

   gebildet ist.

3. Verfahren nach Anspruch 1, **dadurch gekennzeichnet, dass** eine Kippgefahr oder keine Kippgefahr anzeigbar ist (Fig. 2a).

4. Verfahren nach Anspruch 2, **dadurch gekennzeichnet, dass** ein hoher Schwerpunkt oder kein hoher Schwerpunkt anzeigbar ist (Fig. 2 b).

5. Verfahren nach Anspruch 1 oder 2, **dadurch gekennzeichnet, dass** bei der Ausführung "unabhängige Versorgung jeder Luftfeder je Achse (30)" eine bestimmte Querbeschleunigung ($b_y$) einer stationären Druckdifferenz ($\Delta p_{i\,stat}$) entspricht.

6. Verfahren nach einem der Ansprüche 1, 2 oder 5, **dadurch gekennzeichnet, dass**, wenn beispielsweise ein bleibender Luftdruckoffset vorhanden ist, dieser auf einer nicht seitlich geneigten Teilstrecke ermittelt wird.

7. Verfahren nach Anspruch 1 oder 2, **dadurch gekennzeichnet, dass** bei der Ausführung "linke und rechte Luftfeder gemeinsam versorgt (43) oder wenn eine Verbindungsleitung (43) zwischen rechter (42) und linker Luftfeder (41) besteht, die Zeit $T_1$ (Fig. 6) einer Druckdifferenz ($\Delta p_i$) in der genannten Leitung einer Querbeschleunigung ($b_y$) und diese wiederum einer äquivalenten stationären Druckdifferenz ($\Delta p_{i\,stat}$) zugeordnet ist.

8. Verfahren nach einem der Ansprüche 1, 5 oder 7, **dadurch gekennzeichnet, dass** während einer beliebigen Kurvenfahrt, das Kippmoment ($M_{ki}$) ermittelt wird.

9. Verfahren nach einem der Ansprüche 2, 5 oder 7, **dadurch gekennzeichnet, dass** während einer beliebigen Kurvenfahrt, die Schwerpunkthöhe ($h_2$, Fig. 8 und 9) ermittelt wird, wobei ein Meßgerät zur Erfassung der Querbeschleunigung erforderlich ist.

10. Verfahren nach Anspruch 1, **dadurch gekennzeichnet, dass** die aktuellen Werte eines wirkenden Kippmomentes ($M_k$) als Eingangsgrößen für ein fortgeschrittenes Fahrzeugregelungssystem bereitstellbar sind.

11. Verfahren nach Anspruch 2, **dadurch gekennzeichnet, dass** die aktuelle Schwerpunkthöhe (h) als Eingangsgröße für ein fortgeschrittenes Fahrzeugregelungssystem bereitstellbar ist.

### Claims

1. Method for on-board ascertainment of the acting tilting moment ($M_k$) of a vehicle with at least one air-sprung axle, with air springs (31, 32, 41, 42) on the left- and right-hand sides of the at least one axle for proportional support of the sprung masses ($m_g$) of the vehicle, with sensors for recording the air pressure ($p_{li}$, $p_{re}$) in each of said air springs, with an air supply system (30, 40) for the air springs (31, 32, 41, 42), whereby either each of said air springs is separately supplied (30) or the air springs are supplied via a common supply line or have a connecting line (43), and with an on-board computer or an equivalent computer, **characterised in that** the approximate tilting moment ($M_k$) is formed on the basis of the different pressures ($p_{li}$, $p_{re}$) in the air springs (31, 32, 41, 42) on the left- and right-hand sides of at least one axle and on the basis of whether each air spring per axle is connected up separately (30) or whether the left and right air springs on an axle are connected via a connecting line (43) and that a remaining air pressure offset which may occur is ascertained and included in the calculation of the tilting moment ($M_k$).

2. Method according to Claim 1, **characterised in that** an actual height (h) of the centre of gravity of the vehicle is, on the basis of the ascertained tilting moment ($M_k$), established from

   • a lateral acceleration ($b_y$) of the motor vehicle, measured on board,
   • the height of the centre of gravity ($h_2$) of the sprung mass (24) above the rolling pole (WP), whereby the height of the centre of gravity ($h_2$) of the sprung mass (24) above the rolling pole (WP) is ascertained from the tilting moment ($M_k$) and the lateral acceleration ($b_y$) measured on board and whereby the sprung mass (24) consists of the sprung masses ($m_{gi}$) of the vehicle body (22) and the load (23) and
   • the unsprung masses (21) and the height ($h_1$) of the rolling pole.

3. Method according to Claim 1, **characterised in that** it can be indicated whether or not there is an overturning risk (Fig. 2a).

4. Method according to Claim 2, **characterised in that** it can be indicated whether or not there is a high centre of gravity (Fig. 2b).

5. Method according to Claim 1 or 2, **characterised in that** in the version with "separate supply for each air spring per axle (30)" a certain lateral acceleration ($b_y$) corresponds to a stationary pressure difference ($\Delta p_{i\,stat}$).

6. Method according to one of the Claims 1, 2 or 5, **characterised in that** if, for example, a remaining air pressure offset is present it will be ascertained on a stretch of road that does not slope to the side.

7. Method according to Claim 1 or 2, **characterised in that** in the version with "left- and right-hand air springs are jointly supplied (43) or if a connecting line (43) between the right-hand (42) and left-hand (41) air springs is present", the time $T_1$ (Fig. 6) of a pressure difference ($\Delta p_i$) in said line will be allocated to a lateral acceleration ($b_y$) which in turn will be allocated to an equivalent stationary pressure difference ($\Delta p_{i\,stat}$).

8. Method according to one of the Claims 1, 5 or 7, **characterised in that** the tilting moment ($M_k$) is ascertained while the vehicle negotiates a curve.

9. Method according to one of the Claims 2, 5 or 7, **characterised in that** while the vehicle negotiates a curve the height of the centre of gravity ($h_2$, Figs. 8 and 9) is ascertained, whereby a measuring unit is required for ascertaining the lateral acceleration.

10. Method according to Claim 1, **characterised in that** the actual values of an acting tilting moment ($M_k$) can be supplied as input variables for an advanced vehicle control system.

11. Method according to Claim 2, **characterised in that** the actual height (h) of the centre of gravity can be supplied as an input variable for an advanced vehicle control system.

**Revendications**

1. Procédé pour la détermination à bord du moment de renversement actif ($M_k$) d'un véhicule comprenant au moins un essieu à suspension pneumatique, des coussins d'air (31, 32, 41, 42) à gauche et à droite du dit au moins un essieu pour l'appui proportionnel des masses en suspension ($m_g$) du véhicule, des capteurs pour détecter la pression d'air ($P_{li}$, $P_{re}$) dans chacun des dits coussins d'air, un système d'alimentation en air (30, 40) pour les coussins d'air (31, 32, 41, 42), soit chaque coussin d'air étant alimenté de manière autonome (30), soit les coussins d'air étant alimentés par l'intermédiaire d'une conduite d'alimentation commune ou ayant une conduite de raccordement (43), et un ordinateur de bord ou un ordinateur équivalent, **caractérisé en ce que** le moment de renversement approximatif

($M_k$) est formé à partir de la connaissance des différentes pressions ($P_{li}$, $P_{re}$) dans les coussins d'air (31, 32, 41, 42) à gauche et à droite d'au moins un essieu et en tenant compte du fait de savoir si chaque coussin d'air par essieu est autonome (30) ou si le coussin d'air de gauche et celui de droite d'un essieu sont raccordés par l'intermédiaire d'une conduite de raccordement (43), et **en ce qu'**un décalage de pression d'air restant, se produisant éventuellement, est déterminé et pris en compte dans le calcul du moment de renversement ($M_k$).

**2.** Procédé selon la revendication 1, **caractérisé en ce qu'**une hauteur momentanée du centre de gravité (h) du véhicule, en prenant pour base le moment de renversement déterminé ($M_k$), est formée à partir

* d'une accélération transversale ($b_y$) du véhicule automobile, mesurée à bord,
* de la hauteur du centre de gravité ($h_2$) de la masse en suspension (24) au-dessus du pôle de roulis (WP), la hauteur du centre de gravité ($h_2$) de la masse en suspension (24) au-dessus du pôle de roulis (WP) étant déterminée à partir du moment de renversement ($M_k$) et de l'accélération transversale ($b_y$) mesurée à bord, et la masse en suspension (24) étant constituée des masses en suspension ($m_{gi}$) de la carrosserie du véhicule (22) et du chargement (23), et
* des masses non suspendues (21) et de la hauteur du pôle de roulis ($h_1$).

**3.** Procédé selon la revendication 1, **caractérisé en ce qu'**il est possible d'afficher un risque de renversement ou non (Fig. 2a).

**4.** Procédé selon la revendication 2, **caractérisé en ce qu'**il est possible d'afficher un centre de gravité élevé ou non (Fig. 2 b).

**5.** Procédé selon la revendication 1 ou 2, **caractérisé en ce que**, dans la version « alimentation autonome de chaque coussin d'air par essieu (30) », une accélération transversale déterminée ($b_y$) correspond à une différence de pression stationnaire ($\Delta p_{i\,stat}$).

**6.** Procédé selon l'une quelconque des revendications 1, 2 ou 5, **caractérisé en ce que** lorsque, par exemple, un décalage de pression d'air restant est présent, celui-ci est déterminé sur une portion de trajet non inclinée latéralement.

**7.** Procédé selon la revendication 1 ou 2, **caractérisé en ce que** dans la version « coussins d'air gauche et droit alimentés en commun (43) » ou lorsqu'il y a une conduite de raccordement (43) entre le coussin d'air droit (42) et le coussin d'air gauche (41), le temps $T_1$ (Fig. 6) d'une différence de pression ($\Delta p_i$) dans ladite conduite est attribué à une accélération transversale ($b_y$) et celle-ci est attribuée à une différence de pression stationnaire équivalente ($\Delta p_{i\,stat}$).

**8.** Procédé selon l'une quelconque des revendications 1, 5 ou 7, **caractérisé en ce que** le moment de renversement ($M_{ki}$) est déterminé pendant un trajet quelconque en virages.

**9.** Procédé selon l'une quelconque des revendications 2, 5 ou 7, **caractérisé en ce que** la hauteur du centre de gravité ($h_2$. Fig. 8 et 9) est déterminée pendant un trajet quelconque en virages, ce qui nécessite un appareil de mesure pour détecter l'accélération transversale.

**10.** Procédé selon la revendication 1, **caractérisé en ce que** les valeurs momentanées d'un moment de renversement actif ($M_k$) peuvent être fournies comme valeurs d'entrée à un système avancé de régulation de véhicule.

**11.** Procédé selon la revendication 2, **caractérisé en ce que** la hauteur momentanée du centre de gravité (h) peut être fournie comme valeurs d'entrée à un système avancé de régulation de véhicule.

**Fig. 1**

a)

| Keine Kippgefahr |
| Vorsicht Kippgefahr |
| Alarm Kippgefahr |

b)

| Kein hoher Schwerpunkt |
| Vorsicht erhöhter Schwerpunkt |
| Alarm hoher Schwerpunkt |

**Fig. 2**

**Fig. 3**

**Fig. 4**

## Querbeschleunigung (fahrzeugfest)

b_y

0

Zeit t

Fig. 5

## Druckdifferenz

$\Delta p\,i$

0

$T_1$

Zeit t

Fig. 6

## Äquivalente stationäre Druckdiff.

$\Delta p\,i\,stat$

0

Zeit t

Fig. 7

*80*

*81*

*82*

*83*

Messung 1

$p_{ll}$ $p_{re}$

$b_y$

$\Phi$

$b_y$

Offset

$\Delta pi = p_{re} - p_{ll}$

Störung
(Kurvenfahrt)

Wanken

Druckdifferenz

Echtes Fahrzeug

*84*

Offset-Kompens.

Algorithmus
der Berechnung

$\Delta p_{i\,stat}$

*85*

*86*

Messung 2

P

Kippmoment

$M_{kl}$

$b_y$

$b_{yf}$

$h = \dfrac{\sum\limits_{l} M_{kl}(\Delta p_{i\,stat})}{m_g\, b_{yf}}$

$h$

PT₂

*88*

*87*

Schwerpunkthöhe

Fig. 8

Fig. 9